# EUROPEAN PATENT APPLICATION

(11) **EP 3 950 247 A1**
(43) Date of publication of application: **09.02.2022**
(21) Application number: 21188872.2
(22) Date of filing: 30.07.2021
(51) Int. Cl.: B28B 1/00, B28B 13/02

(54) **EQUIPMENT FOR THE MANUFACTURE OF SLABS MADE OF CERAMIC AND/OR STONE MATERIAL AND/OR MADE OF MINERAL GRITS BOUND WITH RESINS**

(30) Priority: 07.08.2020 IT 202000019795
(71) Applicant: Siti - B&T Group S.p.A., 41043 Formigine (Modena) (IT)
(72) Inventor: TAROZZI, Fabio, 41043 Formigine (MO) (IT)
(74) Representative: Zoli, Filippo

(57) **Abstract**

The equipment (1) for the manufacture of slabs made of ceramic and/or stone material and/or made of mineral grits bound with resins, comprises:
- at least one work surface (2) movable along one direction of forward movement (A); and
- at least one delivery assembly (3) arranged above the work surface (2), containing at least one material (M1,M2) of the ceramic and/or stone type and/or of the type of mineral grits and resins and adapted to release the material (M1,M2) on the work surface (2) to form a slab to be compacted (L);
where the delivery assembly (3) comprises:
- at least one container body (4) defining a plurality of collecting cavities (5) separate from each other and each one adapted to contain a corresponding material (M1,M2) of the ceramic and/or stone type and/or of the type of mineral grits and resins, the collecting cavities (5) being arranged to each other according to a predefined pattern; and
- distribution means (10) arranged below the container body (4) and adapted to release the materials (M1,M2) on the work surface (2) to reproduce the predefined pattern.

## Description

### Technical Field

The present invention relates to a piece of equipment and a process for the manufacture of slabs made of ceramic and/or stone material and/or made of mineral grits bound with resins.

### Background Art

The need is well known in many sectors of industrial activity to renew the manufactured products and to search for new ones in order to distinguish them from those of the competition.

This need is felt, in particular, in the industry dealing with the manufacture of slabs made of ceramic and/or stone material and/or made of mineral grits bound with resins used for the manufacture of, e.g., tiles for floors and/or coverings. Nowadays the market requires more and more special aesthetic effects, such as e.g. the reproduction of the aesthetic effects of natural rocks, such as marble or granite, characterized by the presence of "grains", i.e. streaks of different color than the basic material, having an irregular pattern and crossing the entire thickness thereof.

The manufacture of slabs generally involves a phase of deposition of a plurality of materials to be compacted, which may consist of ceramic powders or a mixture of mineral compounds in granular form (e.g. marble, granite), glass, fragments of mirrors, quartz powder, etc., as well as resins acting as binders, on a working surface, such as a belt or a mold, to form a slab to be compacted. During this deposition, the materials are arranged on the working surface in order to define the final aesthetic effect of the slab.

Depending on the type of materials used, further phases are then carried out, such as e.g. pressing and firing, in the case of ceramic and/or stone materials, or vacuum vibratory pressure and heating, in the case of mineral grits and resins. These operations give the finished slab the characteristic properties of physical and mechanical strength.

A piece of equipment of known type comprises the use of a hopper which extends for the entire width of the slab to be obtained and inside which the materials to be deposited on the working surface are loaded.

The relative movement between the latter and the hopper results in the extraction of the materials from the hopper itself.

In order to obtain special chromatic effects, such as e.g. a "grained" effect, a plurality of different types of materials are deposited inside the hopper, which stratify inside the hopper itself and are then deposited in succession on the working surface.

The equipment of known type does however have some drawbacks.

In fact, due to the friction of the material on the internal walls of the hopper, the flow of the material out of the hopper itself is not even and random, so the intensity of the color of the grains obtained is blurred or inaccurate and especially difficult to reproduce.

Moreover, the material exiting the hopper, coming into contact with the end portion of the walls, is partly dragged on the surface of the slab with a consequent alteration of the desired aesthetic effect.

Last but not least, the slabs thus obtained do generally have veins that are "longitudinal" with respect to the surface of the slab, i.e. they do not pass through the entire thickness thereof. This drawback prevents, therefore, a so-called "passing grain", typical of natural rocks, from being obtained and which is particularly evident in the case wherein coverings are to be made with two surfaces orthogonal to each other, as in the case of worktops for kitchens, bathrooms, or other similar applications, for which it is not possible to obtain a grain substantially continuous along the two orthogonal surfaces.

### Description of the Invention

The main aim of the present invention is to devise a piece of equipment and a process for the manufacture of slabs made of ceramic and/or stone material and/or made of mineral grits bound with resins which allow a wide variety of aesthetic effects to be obtained in a simple and reliable manner.

Another object of the present invention is to devise a piece of equipment and a process for the manufacture of slabs made of ceramic and/or stone material and/or made of mineral grits bound with resins, which allow making slabs provided with delineated and well-defined aesthetic effects and which are reproducible over time.

A further object of the present invention is to devise a piece of equipment and a process for the manufacture of slabs made of ceramic and/or stone material and/or made of mineral grits bound with resins which allow obtaining slabs reproducing the chromatic effect of natural rocks as faithfully as possible. Another object of the present invention is to devise a piece of equipment and a process for the manufacture of slabs made of ceramic and/or stone material and/or made of mineral grits bound with resins which allow overcoming the aforementioned drawbacks of the prior art within a simple, rational, easy and effective to use as well as affordable solution.

The aforementioned objects are achieved by the present equipment for the manufacture of slabs made of ceramic and/or stone material and/or made of mineral grits bound with resins having the characteristics of claim 1.

The aforementioned objects are also achieved by the present process for the manufacture of slabs made of ceramic and/or stone material and/or made of mineral grits bound with resins having the characteristics of claim 15.

### Brief Description of the Drawings

Other characteristics and advantages of the present invention will become more apparent from the description of a preferred, but not exclusive, embodiment of a piece of equipment and a process for the manufacture of slabs made of ceramic and/or stone material and/or made of mineral grits bound with resins, illustrated by way of an indicative, yet non-limiting example, in the accompanying tables of drawings wherein:
Figure 1 is an axonometric view of the equipment according to the invention;
Figures 2 and 3 show the phases of the process according to the invention.

### Embodiments of the Invention

With particular reference to such figures, reference numeral 1 globally indicates a piece of equipment for the manufacture of slabs made of ceramic and/or stone material and/or made of mineral grits bound with resins.

The equipment 1 comprises at least one work surface 2 movable along a direction of forward movement A.

In the embodiment shown in the figures, the work surface 2 is of the type of a conveyor belt. It cannot however be ruled out that the work surface 2 is stationary.

The equipment 1 also comprises at least one delivery assembly 3 arranged above the work surface 2, containing at least one material M1,M2 of the ceramic and/or stone type and/or of the type of mineral grits and resins and adapted to release the material itself on the work surface 2 to form a slab to be compacted L.

In the context of the present disclosure, the expression "ceramic and/or stone material" means a material of the ceramic type, such as e.g. clays, feldspars, silica sand, etc., in the form of atomized, grains or flakes, and/or of the stone type, such as marble, granite, minerals or other natural stones, in the form of powder and/or granules and/or flakes and mixed with a binder of a cement nature or resins. Similarly, the expression "mineral grits and resins" means minerals in a granular form, e.g., marble, granite, glass, mirror fragments, and/or the like, as well as quartz powder, while resins may be, e.g., of the thermosetting type, especially for construction and furniture applications. According to the invention, the delivery assembly 3 comprises at least one container body 4 defining a plurality of collecting cavities 5 separate from each other and each one adapted to contain a relevant material M1,M2 of the ceramic and/or stone type and/or of the type of mineral grits and resins.

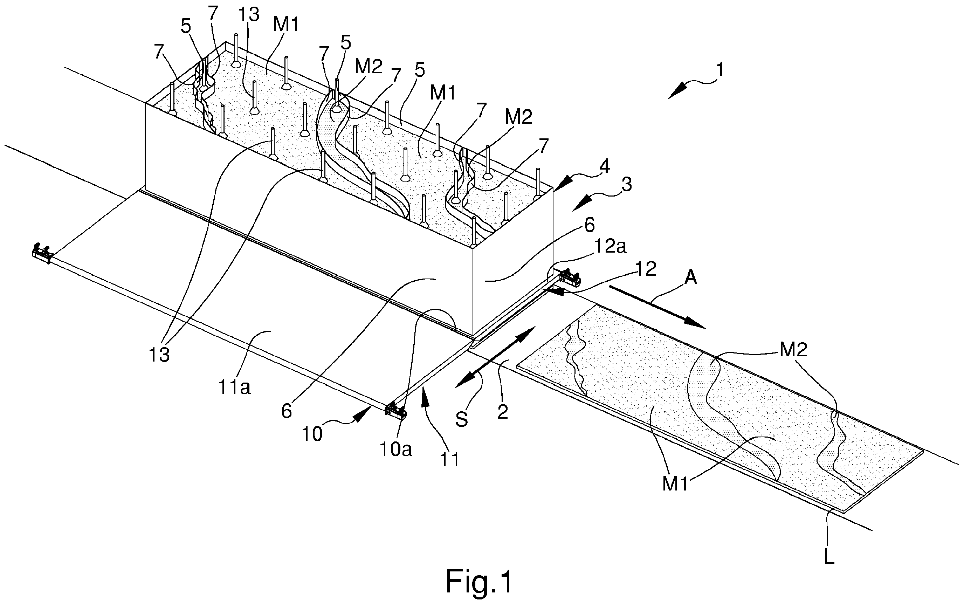

More in detail, as shown in Figure 1, the container body 4 comprises a plurality of perimeter walls 6 bounding a perimeter defining the final dimensions of the slab to be compacted L. As shown by way of example in the figures, the container body 4 has four perimeter walls 6, arranged according to a rectangle. It cannot however be ruled out that the container body 4 has a different conformation or has a different number of perimeter walls 6, depending on the shape that is intended to be given to the slab to be compacted L.

The container body 4 also comprises a plurality of inner walls 7 each of which extending between the perimeter walls 6.

The inner walls 7 subdivide the inner volume of the container body 4 into the aforementioned collecting cavities 5.

Each of the collecting cavities 5 is adapted to contain a first type of material M1 or a second type of material M2 separate from the first type of material M1. Specifically, the types of material M1,M2 differ in at least one of either grain size, color or composition.

The collecting cavities 5 are arranged to each other according to a predefined pattern, so as to obtain a slab to be compacted L provided with a predefined decorative effect and, in particular, a "grained" effect.

The container body 4 comprises at least one release opening 8 of the materials M1,M2, facing the work surface 2, and at least one loading opening 9 of the materials M1,M2, opposite the release opening 8.

Substantially, the container body 4 is open both below and above.

Specifically, each of the collecting cavities 5 defines a relevant release opening 8 and a relevant loading opening 9.

Furthermore, the delivery assembly 3 comprises distribution means 10 arranged below the container body 4 and adapted to release the materials M1,M2 on the work surface 2 to reproduce the predefined pattern.

Advantageously, each of the release openings 8 has a conformation corresponding to the conformation of the relevant collecting cavity 5.

In other words, the perimeter walls 6 extend vertically as far as to contact the distribution means 10.

The delivery assembly 3, therefore, makes it possible to create a slab to be compacted L provided with grains made of different materials and affecting the entire thickness, so as to recreate the aesthetic effect typical of natural rocks. Conveniently, the distribution means 10 define at least one closing wall 11,12 of the release openings 8 and at least one slot 10a for the passage of the materials M1,M2.

The distribution means 10 substantially allow for a gradual release of the materials M1,M2 contained in the collecting cavities 5.

Appropriately, the width of the slot 10a determines the amount of material M1,M2 which is released on the work surface 2 and, consequently, the thickness of the slab to be compacted L.

The distribution means 10 and the container body 4 are mutually movable to release in sequence the materials M1,M2 contained inside the collecting cavities 5 through the slot 10a.

Specifically, in the embodiment shown in the figures, the container body 4 is stationary and the distribution means 10 move relative thereto.

In more detail, the distribution means 10 are movable by shifting with respect to the container body 4 along a direction of sliding S.

The direction of sliding S is substantially horizontal.

As a result of the shift, the slot 10a moves gradually to different portions of the release openings 8 and causes the passage of the materials M1,M2 contained inside the relevant collecting cavities 5.

At the same time, the closing wall 11,12 occludes the remaining portions.

It is easy to appreciate that the speed of shift also affects the amount of material M1,M2 which is released on the work surface 2 and, consequently, on the thickness of the slab to be compacted L.

In the embodiment shown in the figures, the slot 10a extends parallel to the direction of forward movement A and the direction of sliding S is transverse to the direction of forward movement A.

Specifically, the direction of sliding S is orthogonal to the direction of forward movement A.

Further embodiments cannot however be ruled out wherein the slot 10a extends orthogonally to the direction of forward movement A and the direction of sliding S is substantially parallel to the direction of forward movement A.

In the embodiment shown in the Figures, the distribution means 10 comprise at least a first closing wall 11 and a second closing wall 12 spaced apart from each other so as to define the slot 10a.

In more detail, the closing walls 11,12 are arranged side by side above the work surface 2 and the distance between them defines the slot 10a.

Advantageously, the closing walls 11,12 are locked together movable by shifting with respect to the container body 4 along the direction of sliding S. The slot 10a remains substantially of constant amplitude during the shift along the direction of sliding S.

Conveniently, each of the closing walls 11,12 has dimensions at least equal to those of the container body 4.

The closing walls 11,12 shift alternately along the direction of sliding S first in one direction and then in the opposite direction, resulting in the placement of the slot 10a at the release openings 8.

As a result of this shift, moreover, the closing walls 11,12 alternately position themselves to totally close the release openings 8, thus stopping the outflow of the materials M1,M2.

In other words, the release of materials M1,M2 occurs only through the slot 10a.

At each passage of the slot 10a at the release openings 8, the relevant materials M1,M2 are released to generate the slab to be compacted L.

The slab to be compacted L is, therefore, defined by a single layer of materials M1,M2. It cannot however be ruled out that the slab to be compacted L be made from several layers, obtained by shift of the closing walls 11,12 along the direction of sliding S for a corresponding number of times.

Advantageously, at least one of the closing walls 11,12 defines a supporting surface 11a,12a of the materials M1,M2 facing the collecting cavities 5 and operable movable along a direction of work D.

In particular, each of the closing walls 11,12 defines a relevant supporting surface 11a, 12a of the materials M1,M2.

In the embodiment shown in the figures, the supporting surface 11a, 12a is of the type of a conveyor belt.

Each of the supporting surfaces 11a,12a is, therefore, movable along a relevant direction of work D.

The direction of work D is substantially parallel to the direction of sliding S and opposite with respect to the latter.

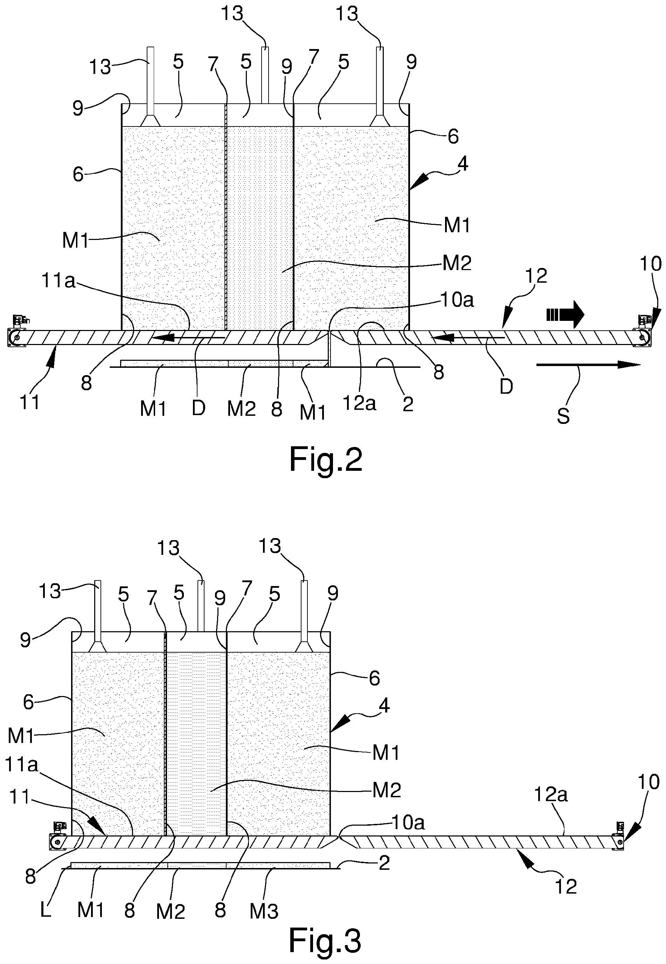

For example, with reference to Figure 2, when the closing walls 11,12 shift along the direction of sliding S from left to right, the supporting surfaces 11a,12a are moved along the corresponding directions of work D to the left and vice versa.

This device allows to avoid the so-called "blurred" effect of the grains, caused by the dragging of the materials M1,M2 along the direction of sliding S during the shift of the closing walls 11,12.

For this purpose, in addition, the speed of movement of each of the supporting surfaces 11a,12a along the relevant direction of work D is equal to the speed of shift of the closing walls 11,12 along the direction of sliding S.

In this way, the materials M1,M2 contained inside the collecting cavities 5 are subjected to two horizontal movements of opposite direction, at the same speed and remain horizontally stationary.

The movement of the supporting surfaces 11a,12a along the direction of work D, therefore, causes the materials M1,M2 to be released onto the work surface 2 in a manner exactly corresponding to their arrangement inside the container body 4, i.e. the arrangement of the collecting cavities 5 according to the predefined pattern.

Advantageously, the equipment 1 comprises loading means of the material M1,M2 inside the collecting cavities 5, arranged at the loading openings 9.

In particular, the loading means comprise a plurality of loading devices 13. The loading devices 13 are adapted to feed the collecting cavities 5 with the relevant materials M1,M2.

The loading devices 13 are of the type, e.g., of tubes connected to relevant storage tanks of the materials M1,M2

Conveniently, each collecting cavity 5 is enslaved by one or more of the loading devices 13.

The loading devices 13 are configured to feed the respective collecting cavities 5 in such a way as to maintain a constant head of material M1,M2 and to ensure that it flows out of the container body 4 in a uniform manner. In doing so, the slab to be compacted L has a uniform thickness at every point.

Depending on the materials used, the equipment 1 may then comprise further components adapted to give the finished slab the desired properties of physical-mechanical strength.

In more detail, the equipment 1 may comprise compaction means and curing means, not shown in detail in the figures, arranged in succession along the direction of forward movement D, downstream of the delivery assembly 3. Specifically, in the case of ceramic and/or stone materials, the compaction means are of the type of a press and the curing means are of the type of a firing kiln. As is known to the technician of the sector, in fact, the slab to be compacted L made of ceramic and/or stone material is first subjected to compaction and, then, fired at high temperatures to obtain the finished slab.

On the other hand, in the case of mineral grits and resins, the compaction means are of the type of a vacuum vibratory press and the curing means are of the type of a heated chamber. The slab to be compacted L made of mineral grits and resins is subjected to a vibrating action, which facilitates the adhesion of the grits, in a depressurized environment so as to eliminate the air present in the interstices between the mineral grits and further optimize the compaction of the slab to be compacted L. Then, the catalysis of the resins binding the grits together takes place inside the heated chamber.

The operation of the present equipment 1 in carrying out the process according to the invention is as follows.

The process comprises, first of all, a supply of a plurality of materials M1,M2 of ceramic and/or stone type and/or of mineral grit and resin type.

As stated above, the types of material M1,M2 differ in at least one of either grain size, color or composition, so as to obtain a slab to be compacted L provided with a special decorative effect.

The process also comprises a supply of at least the container body 4 defining a plurality of collecting cavities 5 separate from each other and each one adapted to contain a corresponding material M1,M2.

As set forth above, the collecting cavities 5 are arranged to each other according to a predefined pattern and each one is provided with a relevant release opening 8 of the material itself.

The process then comprises a delivery of the materials M1,M2 on a work surface 2 to form the slab to be compacted L.

Advantageously, the delivery is carried out by sequentially opening one portion of the release openings 8 in order to progressively release the materials M1,M2 contained inside the relevant collecting cavities 5 on the work surface 2 to reproduce the predefined pattern.

Specifically, the sequential opening is carried out by shift of the closing walls 11,12 along the direction of sliding S.

In addition, the delivery is carried out by moving each of the supporting surfaces 11a,12a along the relevant direction of work D so as to keep the materials M1,M2 substantially stationary with respect to a horizontal direction. As stated above, the direction of work D is substantially parallel to the direction of sliding S and opposite in direction.

In addition, the movement of the supporting surfaces 11a, 12a along the relevant directions of work D is carried out at a speed equal to the shifting speed of the closing walls 11,12 along the direction of sliding S.

The process also comprises at least one phase of loading of the materials M1,M2 inside the collecting cavities 5, carried out by the loading means so as to maintain a constant head of the materials M1,M2 inside the container body 4. The process, finally, comprises a compaction phase of the slab to be compacted L to obtain a compacted slab and a curing phase to obtain the finished slab. The compaction and curing phases are carried out by the compaction means and the curing means described above, respectively, depending on the material used. It has in practice been ascertained that the described invention achieves the intended objects, and in particular the fact is emphasized that the present equipment and the present process allow a wide variety of aesthetic effects to be obtained in a simple and reliable manner.

This result is achieved thanks to the shift of the closing walls along the direction of sliding, which allows a release of materials on the supporting surface, corresponding to the predefined pattern.

The slab to be compacted thus reproduces, as faithfully as possible, the chromatic effect of natural rocks.

In addition, the movement of the closing walls along the relevant directions of work makes it possible to keep the materials horizontally stationary and allows them to be released in a manner exactly corresponding to how they are divided in the container body. This makes it possible, therefore, to produce slabs provided with clear, well-defined aesthetic effects that do not present a "blurred" effect.

## Claims

1. Equipment (1) for the manufacture of slabs made of ceramic and/or stone material and/or made of mineral grits bound with resins, comprising:
- at least one work surface (2) movable along one direction of forward movement (A); and
- at least one delivery assembly (3) arranged above said work surface (2), containing at least one material (M1,M2) of the ceramic and/or stone type and/or of the type of mineral grits and resins and adapted to release said material (M1,M2) on said work surface (2) to form a slab to be compacted (L);
**characterized by** the fact that said delivery assembly (3) comprises:
- at least one container body (4) defining a plurality of collecting cavities (5) separate from each other and each one adapted to contain a corresponding material (M1,M2) of the ceramic and/or stone type and/or of the type of mineral grits and resins, said collecting cavities (5) being arranged to each other according to a predefined pattern; and
- distribution means (10) arranged below said container body (4) and adapted to release said materials (M1,M2) on said work surface (2) to reproduce said predefined pattern.

2. Equipment (1) according to claim 1, **characterized by** the fact that said container body (4) comprises at least one release opening (8) of said materials (M1,M2), facing said work surface (2), and at least one loading opening (9) of said materials (M1,M2), opposite said release opening (8), each of said collecting cavities (5) defining a corresponding release opening (8) and a corresponding loading opening (9).

3. Equipment (1) according to one or more of the preceding claims, **characterized by** the fact that said distribution means (10) define at least one closing wall (11,12) of said release openings (8) and at least one slot (10a) for the passage of said materials (M1,M2), where said distribution means (10) and said container body (4) are mutually movable to release in sequence said materials (M1,M2) contained inside said collecting cavities (5) through said slot (10a).

4. Equipment (1) according to one or more of the preceding claims, **characterized by** the fact that said distribution means (10) are movable by shifting with respect to said container body (4) along a direction of sliding (S), where, as a result of said shift, said slot (10a) moves gradually to different portions of said release openings (8) and determines the passage of said materials (M1,M2) contained inside the corresponding collecting cavities (5), said closing wall (11,12) occluding the remaining portions.

5. Equipment (1) according to one or more of the preceding claims, **characterized by** the fact that said direction of sliding (S) is transverse to said direction of forward movement (A), said slot (10a) extending parallel to said direction of forward movement (A).

6. Equipment (1) according to one or more of the preceding claims, **characterized by** the fact that said distribution means (10) comprise at least a first closing wall (11) and a second closing wall (12) spaced apart from each other so as to define said slot (10a).

7. Equipment (1) according to one or more of the preceding claims, **characterized by** the fact that said closing walls (11,12) are locked together movable by shifting with respect to said container body (4) along said direction of sliding (S).

8. Equipment (1) according to claim 6 or 7, **characterized by** the fact that at least one of said closing walls (11,12) defines a supporting surface (11a,12a) of said materials (M1,M2) facing said collecting cavities (5) and operable movable along a direction of work (D).

9. Equipment (1) according to claim 8, **characterized by** the fact that each of said closing walls (11,12) defines a corresponding supporting surface (11a,12a) of said materials (M1,M2).

10. Equipment (1) according to claim 8 or 9, **characterized by** the fact that said supporting surface (11a,12a) is of the type of a conveyor belt.

11. Equipment (1) according to one or more of the preceding claims, **characterized by** the fact that said direction of work (D) is substantially parallel to said direction of sliding (S) and opposite with respect to the latter.

12. Equipment (1) according to one or more of the preceding claims, **characterized by** the fact that the speed of movement of each of said supporting surfaces (11a,12a) along the corresponding direction of work (D) is equal to the speed of shift of said closing walls (11,12) along said direction of sliding (S).

13. Equipment (1) according to one or more of the preceding claims, **characterized by** the fact that it comprises loading means of said materials (M1,M2) inside said collecting cavities (5), arranged at said loading openings (9).

14. Equipment (1) according to one or more of the preceding claims, **characterized by** the fact that said loading means comprise a plurality of loading devices (13), each collecting cavity (5) being enslaved by one or more of said loading devices (13).

15. Process for the manufacture of slabs made of ceramic and/or stone material and/or made of mineral grits bound with resins, **characterized by** the fact that it comprises at least the following phases:
- supply of a plurality of materials (M1,M2) of the ceramic and/or stone type and/or of the type of mineral grits and resins;
- supply of at least one container body (4) defining a plurality of collecting cavities (5) separate from each other and each one adapted to contain a corresponding material (M1,M2), said collecting cavities (5) being arranged to each other according to a predefined pattern and each one being provided with a corresponding release opening (8) of the material itself;
- delivery of said materials (M1,M2) on a work surface (2) to form a slab to be compacted (L);
wherein said delivery is carried out by sequentially opening a portion of said release openings (8) in order to progressively release said materials (M1,M2) contained inside the corresponding collecting cavities (5) on said work surface (2) to reproduce said predefined pattern.
